# EUROPEAN PATENT APPLICATION

(11) **EP 4 610 188 A1**
(43) Date of publication of application: **03.09.2025**
(21) Application number: 24160475.0
(22) Date of filing: 29.02.2024
(51) Int. Cl.: B65D 19/38, B65G 1/14

(54) **SUPPORT STRUCTURE ASSEMBLY**

(71) Applicant: Erfo B.V., 4836 LK Breda (NL)
(72) Inventor: Lourier, Alfonsus Joannes Gerardus, 2970 's Gravenwezel, Schilde (BE)
(74) Representative: 't Jong, Bastiaan Jacob

(57) **Abstract**

The invention relates to a support structure assembly (1) for supporting goods over other goods, which support structure assembly comprises:
- a first side frame (2) and a second side frame (7), each having a lower beam (3, 8) and two uprights (4, 5, 9, 10) forming a U-shaped frame, and bracing rods (6, 11) extending diagonally between the two uprights;
- a back frame (12) having a lower beam (13) and two uprights (14, 15) forming a U-shaped frame, and bracing rods (16) extending diagonally between the two uprights;
- a top frame (17) having a substantially rectangular support surface;
wherein each of the first side frame, second side frame and back frame are bolted with the free ends of the uprights to the top frame along a side thereof; and
wherein one of the uprights of the back frame is bolted to an upright of the first side frame and wherein the other of the uprights of the back frame is bolted to an upright of the second side frame, such that the support structure assembly has a box shape with an open bottom and one open side.

## Description

The invention relates to a support structure assembly for supporting goods over other goods. Such a support structure is for example known from European patent no. 2927147. These known support structures are used to support, for example a big bag over another big bag. The support structure could also be used to support two stacked crates with solar panels over two stacked crates. This allows for a improved use of the height of a storage space despite that the goods itself cannot be stacked or only to a limited number.

When the support structures according to EP 2927147 are not used, they can be nested, such that the support structures take up limited space. However the number of structures which can be nested is limited and a stack of nested structures still takes up considerable space.

Also when the support structures are to be transported from the factory to a distribution center or between warehouses, then the considerable space the support structures require will result in considerable transportation costs.

It is an object of the invention to reduce or even remove the disadvantages of the prior art.

This object is achieved according to the invention with a support structure assembly for supporting goods over other goods, which support structure assembly comprises:
- a first side frame and a second side frame, each having a lower beam and two uprights forming a U-shaped frame, and bracing rods extending diagonally between the two uprights;
- a back frame having a lower beam and two uprights forming a U-shaped frame, and bracing rods extending diagonally between the two uprights;
- a top frame having a substantially rectangular support surface;

wherein each of the first side frame, second side frame and back frame are bolted with the free ends of the uprights to the top frame along a side thereof; and
wherein one of the uprights of the back frame is bolted to an upright of the first side frame and wherein the other of the uprights of the back frame is bolted to an upright of the second side frame, such that the support structure assembly has a box shape with an open bottom and one open side.

Because the support structure assembly according to the invention is composed out of four frames, which are bolted together, it is possible to easily disassemble the support structure for transport and assemble the support structure again for use.

Also, because the first and second side frame and back frame are all composed out of a lower beam, two uprights and bracing rods, each frame is firm and can easily be handled on its own.

In an embodiment of the support structure assembly according to the invention the top frame is supported on top of the uprights of the first side frame, second side frame and back frame.

When goods are positioned on the support surface of the top frame, then the forces will be directly transferred into the uprights and will not cause any bending moments or shear forces. This attributes to the firmness of the support structure assembly.

In a preferred embodiment of the support structure assembly according to the invention the top frame comprises mounting plates extending from the bottom of the top frame and perpendicular to the support surface and wherein the free ends of the uprights each abut against one of the mounting plates.

The mounting plates align with a side surface of the uprights and allow for easy positioning of the different frames relative to each other, which is of advantages during assembly of the support structure.

In a further embodiment of the support structure assembly according to the invention bolts extend through both the free end of an upright and the corresponding mounting plate. The bolts provide for the bolted connection of the frames and allow for solid fastening of the frames minimizing any play between the side frames, back frame and top frame.

In another embodiment of the support structure assembly according to the invention, wherein the top frame comprises two parallel beams and two parallel crossbeams to form a rectangular shaped frame, and wherein both ends of one of the beams extend beyond the connected crossbeams.

The extending ends provide a stop when two support structure assemblies are nested and ensure that the support structure assemblies can easily be taken out of each other.

In a preferred embodiment of the support structure assembly according to the invention each extending end of one of the beams of the top frame is positioned on top of one upright of one side frame, and wherein the end surface of each extending end is flush with a side surface of the corresponding upright.

This ensures that the access opening of the support structure assembly, such that it can be positioned over some goods, is maximized in width.

In yet another preferred embodiment of the support structure assembly according to the invention a U-profile encloses the end surface of the extending end and the free end of the corresponding upright.

The U-profile strengthens the interface between an upright and the extending end.

In still a further embodiment of the support structure assembly according to the invention of each first side frame and second side frame, the lower beam and one upright are arranged in a single plane and wherein the other upright of the corresponding frame is arranged outside of said plane and abuts an upright of the back frame.

This arrangement provides for a somewhat V-shaped base, which further helps in nesting the support structure assemblies.

These and other features of the invention will be elucidated in conjunction with the accompanying drawings.
Figure 1 shows an exploded view of an embodiment of the support structure assembly according to the invention.
Figure 2A shows a perspective view of the support structure assembly in assembled state from the front.
Figure 2B shows a perspective view of the support structure assembly in assembled state from the back.
Figures 3A - 3C show details in perspective view of the support structure assembly of figure 1.

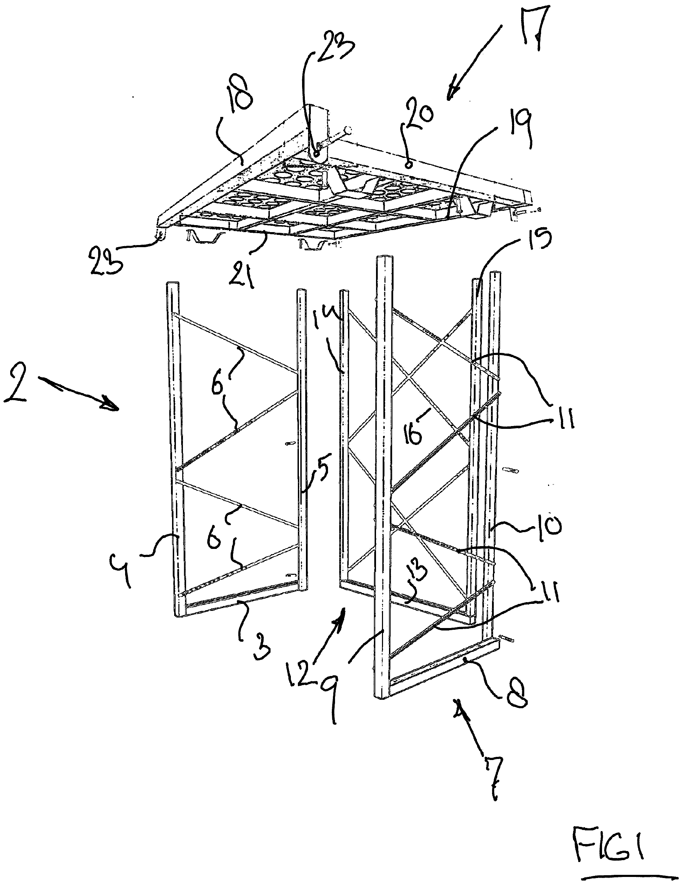

Figure 1 shows an exploded view of an embodiment of the support structure assembly 1 according to the invention. The support structure assembly 1 has a first side frame 2 with a lower beam 3, two uprights 4, 5 and bracing rods 6. The second side frame 7 also has a lower beam 8, two uprights 9, 10 and bracing rod 11. The back frame 12 has a lower beam 13, uprights 14, 15 and bracing rods 16.

At the top a top frame 17 with two parallel beams 18, 19 and two parallel crossbeams 20, 21 forming a rectangular frame is shown. The ends of the beam 18 extend beyond the crossbeams 20, 21 and are provided with mounting brackets 22, 23.

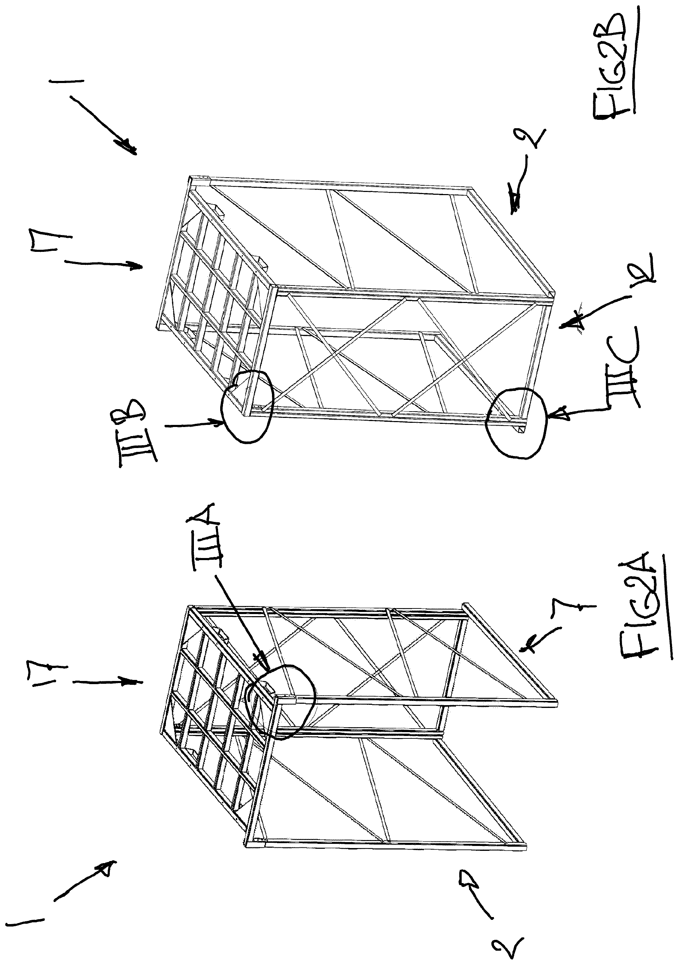

Figures 2A and 2B show the support structure assembly 1 in assembled state, wherein the side frames 2, 7, back frame 12 and top frame 17 are bolted together.

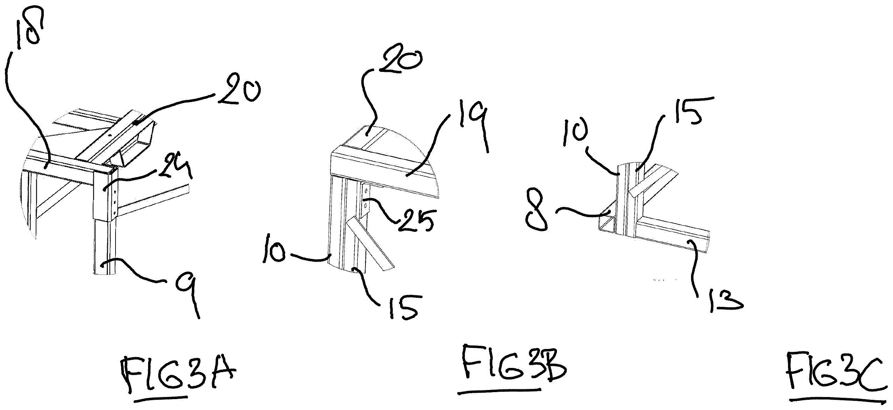

Figure 3A shows a detail of the top right front corner of the support structure 1. The end of the beam 18 extends beyond the crossbeam 20 and is supported onto the top of the upright 9. A U-profile 24 enclosed the end of the beam 18 and the top of the upright 9 to provide a firm coupling of the second side frame with the top frame.

Figure 3A shows a detail of the right top back corner of the support structure. The upright 10 of the second side frame and the upright 15 of the back frame are bolted together and support the beam 19 of the top frame. A mounting plate 25 is attached to the beam 19 of the top frame for connection with bot the upright 10 and the upright 15 by a bolted connection.

Figure 3C shows a detail of the right bottom back corner of the support structure. As explained in relation to figure 3A, both uprights 10, 15 are bolted together. Clearly shown is that the uprights 10 is positioned outside of the plane in which the lower beam 8 and the other upright 9 are positioned. Together with the ends of the beam 18 extending beyond the crossbeams 20, 21 allows for nesting of two identical support structure assemblies 1.

## Claims

1. Support structure assembly for supporting goods over other goods, which support structure assembly comprises:
- a first side frame and a second side frame, each having a lower beam and two uprights forming a U-shaped frame, and bracing rods extending diagonally between the two uprights;
- a back frame having a lower beam and two uprights forming a U-shaped frame, and bracing rods extending diagonally between the two uprights;
- a top frame having a substantially rectangular support surface;
wherein each of the first side frame, second side frame and back frame are bolted with the free ends of the uprights to the top frame along a side thereof; and
wherein one of the uprights of the back frame is bolted to an upright of the first side frame and wherein the other of the uprights of the back frame is bolted to an upright of the second side frame, such that the support structure assembly has a box shape with an open bottom and one open side.

2. Support structure assembly according to claim 1, wherein the top frame is supported on top of the uprights of the first side frame, second side frame and back frame.

3. Support structure assembly according to claim 2, wherein the top frame comprises mounting plates extending from the bottom of the top frame and perpendicular to the support surface and wherein the free ends of the uprights each abut against one of the mounting plates.

4. Support structure assembly according to claim 3, wherein bolts extend through both the free end of an upright and the corresponding mounting plate.

5. Support structure assembly according to any of the preceding claims, wherein the top frame comprises two parallel beams and two parallel crossbeams to form a rectangular shaped frame, and wherein both ends of one of the beams extend beyond the connected crossbeams.

6. Support structure assembly according to claim 5, wherein each extending end of one of the beams of the top frame is positioned on top of one upright of one side frame, and wherein the end surface of each extending end is flush with a side surface of the corresponding upright.

7. Support structure assembly according to claim 6, wherein a U-profile encloses the end surface of the extending end and the free end of the corresponding upright.

8. Support structure assembly according to any of the preceding claims, wherein of each first side frame and second side frame, the lower beam and one upright are arranged in a single plane and wherein the other upright of the corresponding frame is arranged outside of said plane and abuts an upright of the back frame.
